# EUROPEAN PATENT APPLICATION

(11) **EP 4 631 839 A1**
(43) Date of publication of application: **15.10.2025**
(21) Application number: 25169350.3
(22) Date of filing: 09.04.2025
(51) Int. Cl.: B62M 3/04

(54) **PEDAL CRANK MECHANISM**

(30) Priority: 10.04.2024 IT 202400007954
(71) Applicant: Pressofusione Saccense Srl, 35028 Piove di Sacco (PD) (IT)
(72) Inventor: VOLTAZZA, Enrico, 35028 PIOVE DI SACCO (PD) (IT); VOLTAZZA, Fabio, 35028 PIOVE DI SACCO (PD) (IT); VOLTAZZA, Michela, 35028 PIOVE DI SACCO (PD) (IT)
(74) Representative: Rocchetto, Elena

(57) **Abstract**

The invention is a mechanism (100) for generating a rotational motion, comprising a central pivot (P) and two push levers or pedal cranks (10). Each pedal crank (10) is constituted by a single rectilinear rod (11) constrained between two heads (12, 13), wherein said first head (12) is rigidly associated with said central pivot (P), and wherein a freely rotating pedal (20) is mounted on said second head (13), which in turn is rigidly associated with said rod (11). Said rod (11) can slide in a through hole (121) present in said first head (12) between a first position of maximum distance (M), in which said second head (13) and thus said pedal (20) are at the maximum distance from said pivot (P), and a second position of minimum distance (m), in which said second head (13) and thus said pedal (20) are at the minimum distance from said pivot (P).

## Description

The present patent concerns the mechanisms for generating a rotational motion, and more specifically it concerns an improved mechanism with double variable-arm thrust or push lever.

In particular, the new mechanism can be effectively applied as a bicycle drive mechanism.

Mechanisms for generating a rotational motion by means of two push levers, usually called cranks or pedals, are known.

In a nutshell, said mechanisms comprise a rotating shaft or hub, suited to rotate around its own axis, at the ends of which there are two push levers designed to receive the rotational thrust, arranged orthogonally with respect to the shaft and oriented in opposite directions with respect to each other. The rotational motion transmitted to the shaft is in turn transmitted to one or more components to be moved through transmission means kinematically connected to the shaft itself.

In the case of a bicycle, for example, the shaft or hub is connected to the axle by means of sprocket wheels and a chain.

The rotation speed transmitted to the component to be moved depends on the thrust force exerted on the levers, the lever arm of the force, understood as the distance between the point where the force is applied and the axis of the shaft, that is, the length of the lever, and the transmission ratio determined by the transmission components. The lever usually consists of an elongated rigid body having a fixed length, and therefore in order to vary the rotation speed it is necessary to intervene on the transmission ratio and on the thrust force applied.

In this regard, common bicycles are provided with transmission mechanisms consisting of sprocket wheels having various diameters, arranged side by side and mounted on the main hub and/or on the rear wheel shaft, a chain designed to selectively engage with said sprocket wheels, and one or two derailleurs that selectively move the chain onto one or the other sprocket wheel to change the transmission ratio.

Some devices are known which are structured so as to vary the length of the lever arm during pedalling.

For example, the patent document EP0761528 is known, according to which the pedal crank includes, at the push end, a pedal connected to a sprocket wheel meshing with an internally toothed ring, with a 2:1 transmission ratio. The resulting pedal crank has considerable overall dimensions, determined by the radius of the toothed ring, and is heavier than normal pedal cranks. As a result, said device cannot be effectively used, even because it is not suitable for installation on bicycles due to the complexity of the gears, which could easily jam if dirt penetrates therein.

The patent documents WO99/41140 and GB 2055077 disclose similar devices. In such devices, the pedal is directly connected to the pedal crank and can rotate with respect to the latter around an eccentric axis which, in theory, should allow the lever arm to be lengthened/shortened by a distance equal to the length of the eccentricity. Actually, since the pedal can rotate freely with respect to the crank and there is no kinematic guide assembly, the movement of the pedal cannot be effectively transmitted to the crank to ensure the proper operation of the device.

The patent document WO00/51880 is known, which discloses a telescopic pedal crank consisting of a rigid rod fixed to the hub at one end and sliding inside a box-shaped body constrained to a freely rotating pedal. The pedal shaft is rigidly constrained to a plate, which in turn is constrained to said rigid rod by means of a bar positioned alongside said pedal crank. When the pedal is pushed downwards, the pedal crank rotates around its hub, while the presence of the rotating plate and of the rigid rod causes the crank to lengthen/shorten. Even in this case, the device is not suitable for use on ordinary bicycles, because the telescopic rod could jam during its sliding movement due to the penetration of water and dirt into the box-shaped body.

The patent document WO2018/198141 A1 is known, which was filed by the same applicant as the present patent application and discloses a mechanism that solves the above-mentioned drawbacks. In a particularly effective embodiment, said mechanism comprises two push levers, each rigidly connected to a common pivot at one end. Said push levers are arranged orthogonally to the rotation axis of the common pivot, in diametrically opposite positions. A pedal or push projection is mounted on the free end of each push lever so that it can rotate freely.

Each push lever is connected to said push projection in such a way that the latter can slide on the push lever itself, thereby varying the arm, that is, the distance between the push projection and the rotation axis of the pivot.

Each push lever is in turn made up of a pair of rigid bars, parallel to each other.

The mechanism comprises a kinematic guide assembly designed to guide the translational motion of the push projections along the push levers during the circular motion of the latter.

In particular, the kinematic guide assembly consists of a sort of connecting rod-crank system comprising a bar, wherein a first end of said bar is constrained to said common pivot and can rotate freely, while a second end is revolvingly associated with a rotating connection body, in such a way that the latter rotates around a second rotation axis parallel to said rotation axis of the pivot.

Said rotating connection body is also rigidly constrained to the push projection, so that the latter is in a radially eccentric position with respect to said second rotation axis.

Since said rotating connection body can rotate with respect to the bar, the distance of the push projection from the pivot therefore varies during the rotation of the push lever, between a maximum distance position, defined by the distance between the first and the second rotation axes plus the eccentricity, and a minimum distance position, defined by the distance between the first and the second rotation axes minus the eccentricity.

Essentially, pushing down a pedal causes the corresponding push lever and the pivot to rotate around the first rotation axis, while the push projection, thanks to its eccentricity and the kinematic guide assembly, slides along the push lever as its angular position changes, actually performing a circular motion that is eccentric with respect to said first rotation axis of the pivot, wherein the eccentricity corresponds exactly to the eccentricity of the pedal with respect to the rotation axis.

At the minimum distance position, the pedal is moved towards the pivot and therefore the end of the push lever protrudes beyond the pedal, thus constituting an obstacle that can even be potentially dangerous for the cyclist.

The present invention concerns an improved mechanism for generating a rotational motion, with double variable-arm push lever, the main object of which is to exploit to a higher degree the thrust force applied during the active rotation of the pedals, when the lever arm is greater, without however interfering with the regular pedalling cadence. Another object of the present invention is to reduce the overall weight of the device, making it suitable for use even on sports or lightweight bicycles.

Another object of the present invention is to reduce the overall dimensions of the device, making it possible even to install a cover of compact dimensions, such as those normally installed on city bicycles and women's bicycles.

In particular, the new mechanism comprises a pivot to which two push levers or pedal cranks are rigidly constrained, the latter being arranged orthogonally to the rotation axis of the pivot and positioned diametrically opposite each other.

Said push lever consists of a single straight rod, constrained between two heads, wherein the first head is integral with the pivot, while the second head has a pedal constrained thereto in a freely rotating configuration. Said first head is provided with a through hole in which said rod can slide between a first position, in which said second head is at the maximum distance from said first head, and a second position, in which said second head is at the minimum distance from said first head.

Essentially, in the minimum distance position the overall dimensions of the mechanism are reduced, since the pedal is actually closer to the pivot, while the rod no longer protrudes outwards, beyond the pedal, but inwards, towards the pivot, without being a hindrance for the cyclist.

To control the translational motion of said bar, the mechanism comprises a kinematic guide assembly of the connecting rod-crank type, in turn comprising a bar with a first end associated with said pivot in a freely rotating configuration, while the second end is associated with a rotating body so that it can rotate freely, wherein said rotating body rotates with respect to the bar around a second rotation axis parallel to said first rotation axis.

Said pedal is rigidly mounted on said rotating body, in an eccentric position with respect to said second rotation axis.

Thanks to the presence of the kinematic guide assembly, each pedal, during the rotation of the lever around said first rotation axis, performs a circular motion that is eccentric with respect to the first rotation axis, wherein the distance from the first rotation axis is maximum when the pedal is pushed downwards, thus maximizing the torque transmitted to the pivot, and minimum when the pedal completes its return stroke. Said kinematic guide assembly has a special shape, as described and claimed below, to reduce the overall weight of the entire mechanism, thus further improving the efficiency of the latter.

The characteristics of the improved mechanism are better clarified in the following description, making reference to the drawings, which are attached by way of nonlimiting example.
Figure 1 shows a three-dimensional view of the new improved mechanism (100), while
Figure 2 shows the same mechanism (100) from a different perspective.
Figure 3 shows a diagram of the mechanism's motion, which illustrates how the pedal (20) performs a complete circular motion that is eccentric with respect to the rotation axis of the central pivot.
Figure 4 shows the mechanism (100) of Figures 1 and 2 in a position in which the pedal (20) is closest to the rotation axis of the central pivot.
Figure 5 shows a detailed view only of the bar (31) of the kinematic guide assembly, in which its particular configuration can be seen.

The improved mechanism (100) for generating a rotational motion comprises a central pivot (P) designed to rotate around its own axis, hereinafter referred to as the first rotation axis (X1).

Two push levers or pedal cranks (10) are rigidly constrained to said pivot (P), arranged orthogonally to said first rotation axis (X1), positioned diametrically opposite each other and offset by 180°. Said pedal cranks (10) and said pivot (P) therefore rotate together around said first rotation axis (X1).

For the sake of clarity, the figures show only a single pedal crank (10).

Each push lever or pedal crank (10) consists of a single straight rod (11) constrained between two heads (12, 13).

The first head (12) is rigidly associated with said central pivot (P). A pedal (20) is mounted on the second head (13) and can rotate freely. Said pedal (20) can therefore rotate around its rotation axis (X3) with respect to the pedal crank (10).

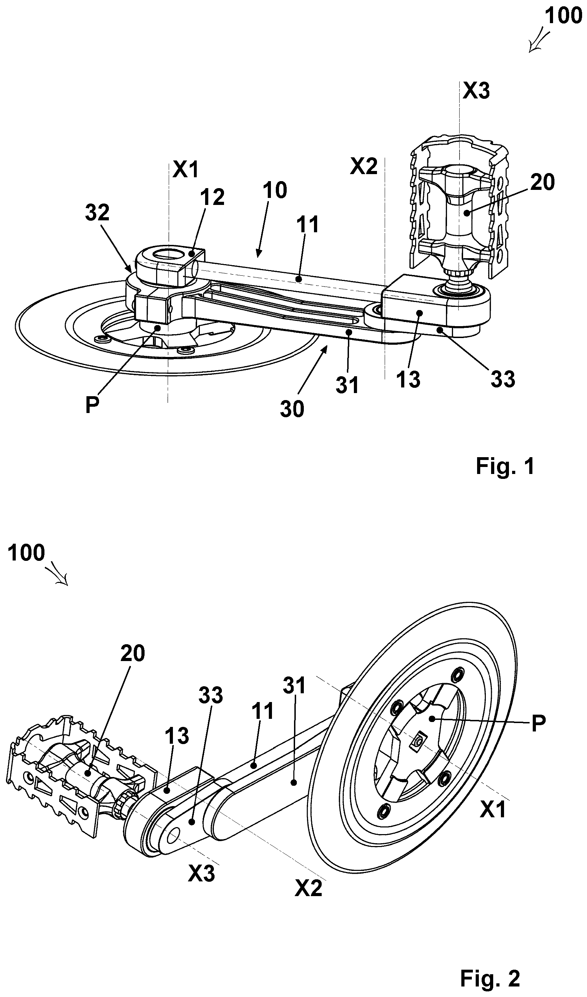

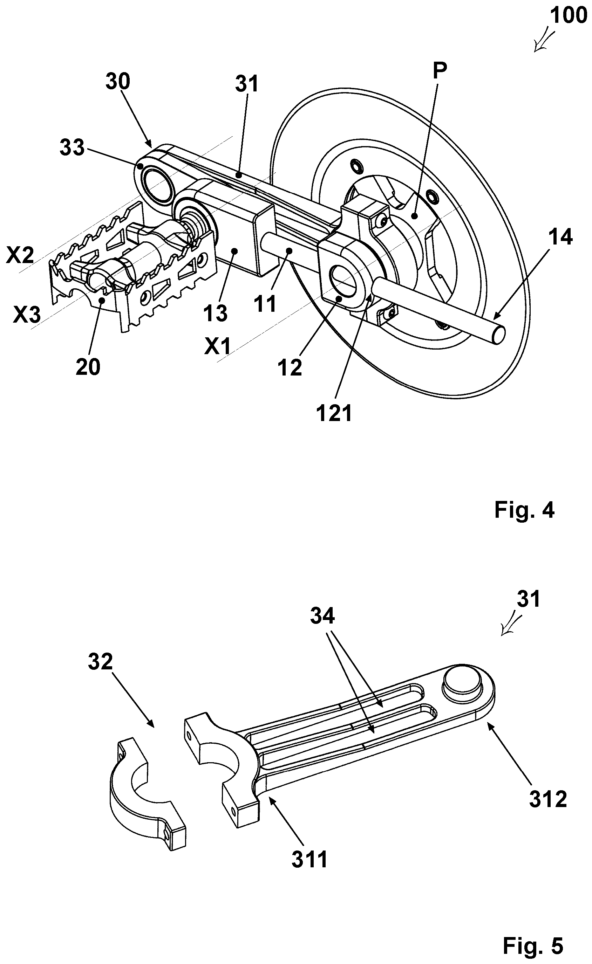

As shown in Figure 4, said first head (12) is provided with a through hole (121) in which said rod (11) can slide between two extreme positions: a position shown, for example, in Figure 1, in which said second head (13) and therefore said pedal (20) are at the maximum distance from the pivot (P), and a second position shown in Figure 4, in which said second head (13) and therefore said pedal (20) are at the minimum distance from the pivot (P).

In said minimum distance position, the rod (11) is therefore moved towards the pivot (P), in such a way that its free end (14), opposite the pedal (20), protrudes from the opposite side of the pivot (P), while still remaining within the overall dimensions of the mechanism.

This sliding movement is controlled by means of a kinematic guide assembly (30) described and claimed below.

Said kinematic guide assembly (30) comprises an articulated rod, which in turn comprises a bar (31) and a rotating body (33) revolvingly associated with each other in such a way that the rotating body (33) can rotate with respect to the bar (31) around a rotation axis hereinafter referred to as the second rotation axis (X2).

Said bar (31) comprises a first shaped end (32), associated with the pivot (P) in a freely rotating configuration. The bar (31) can therefore rotate freely around said first rotation axis (X1).

As already explained, the second end (312) of said bar is revolvingly associated with said rotating body (33).

Said bar (31) is configured in a special manner, as shown in Figure 5, and comprises thinner sections or even through holes (34), which reduce the overall weight of the mechanism.

Said bar (31) is also tapered starting from said first end (32), where it has a thicker part (311), towards said second end (312), where it is thinner.

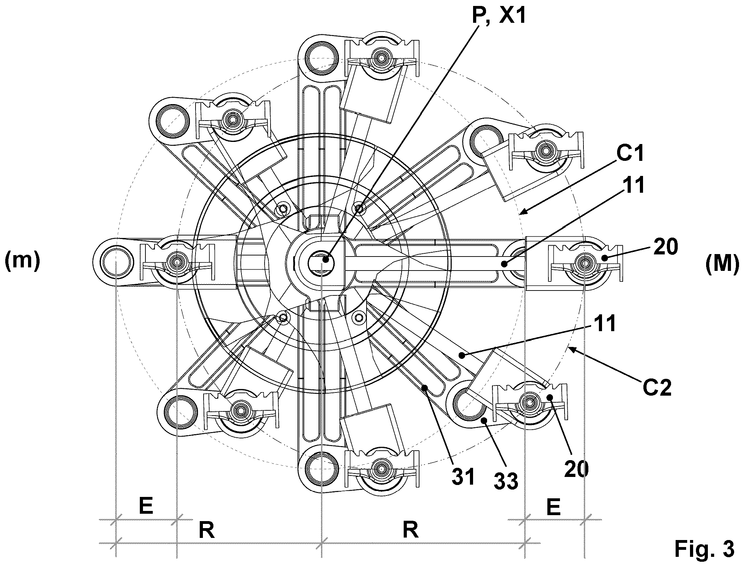

Said rotating body (33) is in turn rigidly constrained to said pedal (20), so that said pedal (20) is eccentric with respect to said second rotation axis (X2) and, in particular, said rotation axis (X3) of the pedal (20) with respect to the pedal crank (10) is arranged parallel to said second rotation axis (X2), at a distance hereinafter referred to as eccentricity (E) and indicated in Figure 3.

The pushing force exerted by the cyclist on the pedal (20) causes the pedal crank (10) to rotate around said pivot (P), while said kinematic guide assembly (30) changes the radial distance of said pedal (20) during rotation, causing said rod (11) to translate with respect to the pivot (P), as described above.

As shown in Figure 3, during the rotation of the pedal crank (10), which performs a circular motion (C1) around the first rotation axis (X1), the pedal (20) performs a circular motion (C2) that is eccentric with respect to said first rotation axis (X1) by a distance corresponding to said eccentricity (E).

The pedal (20), in fact, moves from a position of maximum distance (M) from the pivot (P), shown on the right in Figure 3, in which the distance is given by the sum of the distance (R) between the first and the second rotation axes (X1, X2) and the eccentricity (E), to a position of minimum distance (m) from the pivot (P), shown on the left in Figure 3, given by the distance (R) between the first and the second rotation axes (X1, X2) minus the eccentricity (E).

Therefore, with reference to the above description and the attached drawings, the following claims are made.

## Claims

1. Mechanism (100) for generating a rotational motion, comprising a central pivot (P) intended to rotate around its own axis, hereinafter referred to as the first rotation axis (X1), and two push levers or pedal cranks (10) rigidly constrained to said pivot (P) in diametrically opposite positions and arranged orthogonally to said first rotation axis (X1), each push lever or pedal crank (10) being constituted by a single rectilinear rod (11) constrained between two heads (12, 13), wherein said first head (12) is rigidly associated with said central pivot (P), and wherein a freely rotating pedal (20) is mounted on said second head (13), which in turn is rigidly associated with said rod (11), **characterized in that** said first head (12) is provided with a through hole (121) in which said rod (11) slides between two extreme positions during its rotation around said first rotation axis (X1):
- a first position of maximum distance (M), when the pedal (20) is pushed downwards, in which said second head (13) and thus said pedal (20) are at the maximum distance from said pivot (P),
- a second position of minimum distance (m), when the pedal (20) completes its return stroke, in which said second head (13) and thus said pedal (20) are at the minimum distance from said pivot (P),
and wherein said mechanism (100) further comprises a kinematic guide assembly (30) associated with each pedal crank (10), wherein said kinematic guide unit (30) comprises an articulated rod, in turn comprising a bar (31) and a rotating body (33) revolvingly associated with each other so that the rotating body (33) can rotate with respect to the bar (31) around a second rotation axis (X2) parallel to said first rotation axis (X1), and wherein said bar (31) is associated with said pivot (P) in a freely rotating configuration, while said rotating body (33) is in turn rigidly constrained to said pedal (20), in such a way that said pedal (20) is eccentric with respect to said second rotation axis (X2), and in particular in such a way that the rotation axis (X3) of the pedal (20) with respect to said pedal crank (10) is parallel to said second rotation axis (X2) according to a given distance or eccentricity (E), and wherein during the rotation of the pedal crank (10), which follows a circular motion (C1) around the first rotation axis (X1), said pedal (20) follows an eccentric circular motion (C2) with respect to said first rotation axis (X1), according to a distance that corresponds to said eccentricity (E).

2. Mechanism (100) according to claim 1, **characterized in that** said kinematic guide unit (30) and said pedal crank (10) are configured so that:
- in said position of maximum distance (M), the distance of said pedal (20) from the pivot (P) is the sum of the distance (R) between said first rotation axis and said second rotation axis (X1, X2) and said eccentricity (E),
- in said position of minimum distance (m), the distance of said pedal (20) from the pivot is the distance (R) between said first rotation axis and said second rotation axis (X1, X2) minus the eccentricity (E).

3. Mechanism (100) according to claim 1, **characterized in that** said bar (31) comprises thinner through or non-through parts (34).

4. Mechanism (100) according to claim 1, **characterized in that** the thickness of said bar (31) tapers from the first end (32) associated with said pivot (P), where said bar (31) has a thicker part (311), towards the second end (312), where it is thinner.

5. Bicycle, **characterized in that** it comprises the mechanism (100) according to one or more of the preceding claims, wherein said pivot (P) is the hub of the crank axle of the bicycle.
